# EUROPEAN PATENT SPECIFICATION

(11) **EP 4 096 570 B1**
(45) Date of publication and mention of the grant of the patent: **13.03.2024**
(21) Application number: 21707013.5
(22) Date of filing: 31.01.2021
(51) Int. Cl.: A61C 19/045, A61C 13/00, A61C 11/00, A61C 13/34

(54) **METHOD FOR THE DYNAMIC TESTING OF DENTAL PROSTHESES, AND SYSTEM FOR CARRYING OUT SAID METHOD**
VERFAHREN ZUR DYNAMISCHEN PRÜFUNG VON ZAHNPROTHESEN UND SYSTEM ZUR DURCHFÜHRUNG DES VERFAHRENS
PROCÉDÉ DE TEST DYNAMIQUE DE PROTHÈSES DENTAIRES ET SYSTÈME PERMETTANT LA MISE EN OEUVRE DE CE PROCÉDÉ

(30) Priority: 31.01.2020 IT 202000001981
(43) Date of publication of application: 07.12.2022
(73) Proprietor: Rampulla, Giuseppe, 43028 Tizzano Val Parma (PR) (IT); Pighin, Luca, 33080 Zoppola (PN) (IT)
(72) Inventor: Rampulla, Giuseppe, 43028 Tizzano Val Parma (PR) (IT); Pighin, Luca, 33080 Zoppola (PN) (IT)
(74) Representative: Ruzzu, Giammario
(86) International application number: PCT/IB2021/050758
(87) International publication number: WO 2021/152552

(56) References cited:
- EP-A2- 0 910 997
- US-A1- 2019 290 408
- US-B1- 6 413 085

## Description

### TECHNICAL FIELD

The present invention belongs to the technical sector relating to dental technology and dentistry, and more precisely to the construction and testing of dental prostheses.

In particular, the present invention consists of a method, and a corresponding system, for detecting the masticatory dynamics of a subject who needs a dental prosthesis, and for the verification of the prosthesis made for that subject on the basis of the masticatory dynamics detected.

### BACKGROUND ART

In dental technology, the procedures for making a dental prosthesis for a subject are almost standardized, often involving, as a first step, the taking of a negative cast of one or both of the dental arches of the latter.

From the negative casts, relative positive models are then obtained using resins or gypsum, in which there is the space/s in which to insert the prosthesis.

The prosthesis thus created usually reproduces the desired shape and dimensions with good approximation so that it fits perfectly into the space left free in the dental arch of the subject for which it is intended, but it needs adjustments in order to be able to adequately replace the missing portion of teeth.

These adjustments, still today, are often carried out through repeated direct tests on the recipient of the prosthesis at the dentist's office, with the collaboration of the dental technician present, who makes the adjustments until a well-sized and positioned prosthesis is obtained, and that the subject feels correct.

A more modern methodology provides for the assembly of the prosthesis and the model reproduced starting from the cast on a so-called "mechanical articulator", which consists of an articulated structure capable of accommodating the lower and upper arches of the model; one of the supports of the arches, usually the upper one, is made mobile with respect to the lower one, and in particular hinged to it, according to a direction of mutual approach and departure, to simulate the relative movements of one dental arch with respect to the other.

The movement is carried out manually to check the correct occlusion of the two dental arches with the prosthesis inserted, and to make the necessary, and progressive, adjustments.

### TECHNICAL PROBLEM

Although the fidelity of the shapes of the dental arch models has become high, the checks and simulations that can be carried out using the mechanical articulator are necessarily based on standard facial movements, limited by the kinematics of the hinge joint of the articulator.

Basically, in the aforementioned tests there is no correspondence with the real chewing movements of the recipient of the prosthesis, which are always different from those of all the others, due to the always different morphologies of the skull and jaw, the structure (and possible asymmetries or other defects) of the mandibular joints of the individual, the consistency and symmetry of the muscle bundles that control them, etc.

To overcome these limits, which make the tests of the prostheses not perfectly respond to the real situation of when the same will be found in the mouth of the subject, the same Applicant filed the patent application for industrial invention N° 102017000110539 on 03/10/2017, entitled "Method for the dynamic testing of dental prostheses, and system for carrying out said method".

In the document just referred to, a method for verifying dental prostheses is protected, which envisages the use of an articulator robot to faithfully simulate the personal chewing movements of each subject to whom the prosthesis is intended, after said chewing movements have been detected by taking images, processed electronically to create a program suitable for appropriately driving the aforementioned articulator robot, on which a model of the dentition of that subject and the prosthesis made for it are mounted.

With the implementation of the aforementioned method, considerable progress has been made in terms of correspondence between the test conditions of the prosthesis on the articulator robot and the real ones in the patient's mouth, compared to when only a manual mechanical articulator is used.

However, in practical situations of use, with different subjects, some limitations have emerged regarding the detection phases of chewing movements, which are complex and combined and therefore require a better procedure to obtain greater accuracy and completeness of the acquired data.

The latter, then, represent the essential basis for being able to subsequently replicate the movements by means of suitable commands of the articulator robot.

EP 0 910 997 A2 discloses a system (articulating robot) and the method for the simulation of the masticating movement based on the three-dimensional data acquired from the patient, but it does not disclose how the robot is adjusted in relation to the mechanical articulator so that the model produced and fitted in mechanical articulator is properly fixed in the robot, and that the simulation of the model really corresponds to the masticating movement of the patient,

### OBJECTS OF THE INVENTION

The purpose of the present invention is therefore to propose a method for the dynamic testing of dental prostheses that allows the positional relationship between the dental arches of the subject to be detected in a very accurate way, and then to report said positional relationship exactly between the models of the same dental arches, with the prosthesis, in the assembly phase in an articulator robot, then to acquire three-dimensional parameters relating to all the possible chewing movements of the same subject, so as to be able to command said articulator robot to faithfully replicate said chewing movements and verify the behavior of the dental prosthesis itself.

Another object of the invention is to provide tools necessary or useful for carrying out the detection of the aforementioned positional relationship between the dental arches of the subject.

A further purpose of the invention is to provide suitable tools for the acquisition of the aforementioned three-dimensional parameters relating to the personal chewing movements of the recipient of the prosthesis.

### SUMMARY OF THE INVENTION

The aforementioned purposes are fully achieved by means of a method for the dynamic testing of dental prostheses, and by a system that implements it, where one of said dental prostheses is intended to be implanted in a recipient subject, for which a model has been made of dentition comprising a model of an upper dental arch and a model of a lower dental arch, with each of said models obtained starting from respective negative casts of said upper and lower dental arches.

The method involves the following operational steps:
1) application to said negative casts of the upper and lower dental arches of relative bases provided with a predetermined external attachment fork;
2) assembly of the base with a negative cast of the upper dental arch, using the relative fork, in an attitude detection device;
3) introduction of said base with a negative cast of the upper dental arch into the oral cavity of the aforementioned subject, with the head of the latter placed in a predetermined position and with said device for detecting the structure protruding from the outside of the mouth;
4) acquisition, by means of said attitude detection device, of the angular values of inclination of the aforementioned negative cast of the upper dental arch and therefore of the upper dental arch itself, or of the jaw, of the aforementioned subject;
5) extraction from the oral cavity of the aforementioned subject of said base with negative cast of the upper dental arch with adjoining device for detecting the attitude;
6) assembly of the base complex with a negative cast of the upper dental arch and a trim detection device in a manual articulator;
7) coupling of the aforementioned negative cast of the upper dental arch with the respective model of the upper dental arch and the addition of the filling material necessary to close the space between the same model of the upper dental arch and a corresponding bracket of said manual articulator;
8) removal from the latter of the base complex with a negative cast of the upper dental arch and a device for detecting the attitude and disassembly of the same base with a negative cast of the upper dental arch;
9) repetition of steps 2) to 8) using the aforementioned base with a negative cast of the lower dental arch;
10)assembly on said manual articulator of an extensible column template for detecting the configuration assumed as a consequence of the subsequent assembly of the aforementioned negative casts and models of said upper and lower dental arches;
11)use of the aforementioned extensible column template to record the configuration of an articulator robot in the same way as the aforementioned configuration of the manual articulator;
12)assembly on said articulator robot, thus registered, of the aforementioned models of said upper and lower dental arches, with at least one dental prosthesis applied to be tested;
13)acquisition and digitization of a predetermined sequence of chewing movements, on at least three reference axes, by means of video footage of the subject carried out with a suitable 3D scanner, with the same subject wearing positional reference means of the upper and lower dental arches, provided with respective upper and lower markers with at least three detection points, located outside the mouth;
14)digital processing of these shots with a program generator, to create a sequence of commands suitable for replicating the personalized mandibular movements of said subject;
15)actuation of the aforementioned articulator robot with said sequence of commands, to move the aforementioned models of said upper and lower dental arches, having applied at least one dental prosthesis to be tested, in perfect replication to the mandibular movements of the subject destined to receive the same prosthesis, so as to being able to evaluate the correctness of the shape of the dental prosthesis itself, and possibly modify it.

### BRIEF DESCRIPTION OF THE DRA WINGS

The characteristics of the invention will become evident from the following description of a method for the dynamic testing of dental prostheses, and a system for implementing this method, in accordance with what is proposed in the claims and with the aid of the attached drawing tables, in the which:
- Fig. 1 illustrates, with a block diagram, the significant phases of the method and their correlation with accessory phases;
- Fig. 2 shows a negative cast of a dental arch mounted on a base with an external attachment fork;
- Fig. 3 illustrates the phase of the method relating to the acquisition of the position of the cast of Fig. 2 introduced into the oral cavity of the person concerned, by means of a buoyancy detection device applied externally using said attachment fork;
- Figs. 4A, 4B, 4C, 4C illustrate subsequent steps to mount the models of the upper and lower arches on a manual articulator with the positions measured by the attitude detection device;
- Fig. 5 illustrates the phase of capturing video images relating to the subject's chewing movements;
- Fig. 6 illustrates the phase of detecting the final configuration assumed by the manual articulator using a column template;
- Fig. 7 illustrates the initial placement of an articulator robot using the column template taken from the manual articulator;
- Figs. 8A, 8B illustrate two positions of the articulator robot, with the models of the dental arches and at least one prosthesis mounted, during the replication of the subject's chewing movements.

### DESCRIPTION OF PREFERRED EMBODIMENTS OF THE INVENTION

In the above figures, the reference 100 indicates, as a whole, a system for the dynamic testing of a dental prosthesis 1 intended to be implanted in a recipient subject S, for which a dentition model has been made including an arch model upper dental arch 20 and a lower dental arch model 30, with each of said models 20, 30 obtained starting from respective negative casts 2, 3 of said upper and lower dental arches.

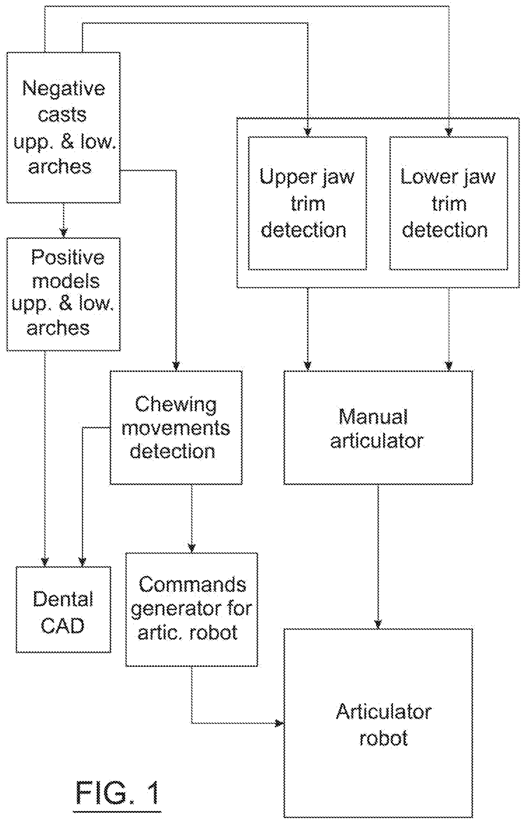

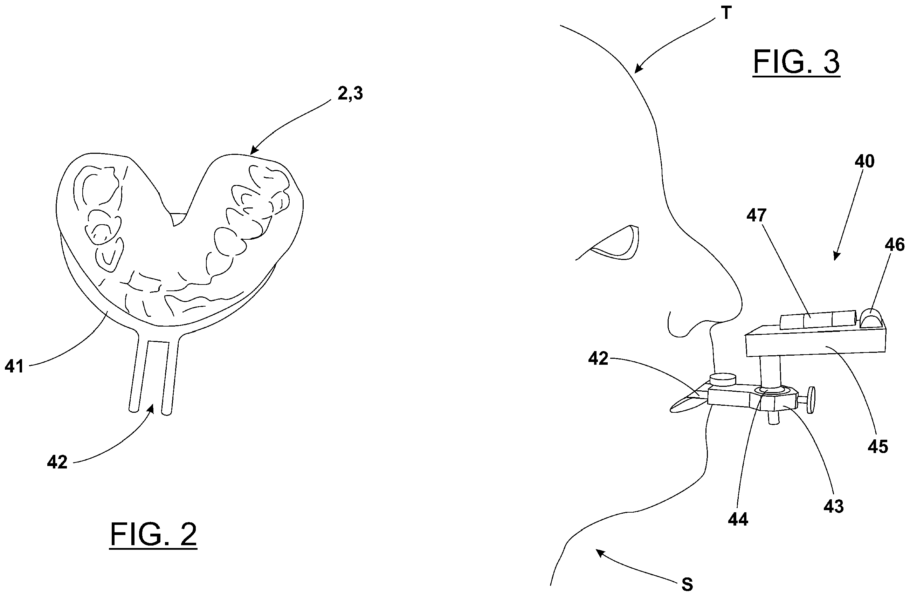

The system 100 is illustrated in the block diagram of Fig. 1 and comprises, among other things, an attitude detection device 40 in which are provided: at least two bases 41, each provided with an external attachment fork 42, intended to support said negative casts 2, 3 (Fig. 2) of the upper and lower dental arches.

Each base 41, with its relative negative cast 2, 3 is adapted to be introduced, one at a time, into the oral cavity of the aforementioned subject S, with the head T of the latter arranged in a predetermined position and with said device for detecting the structure 40 projecting in cantilever form outside the mouth (Fig. 3).

Each base 41 is removably associated, by means of the relative fork 42, to a block 43 to which, by means of a lockable ball joint 44, a reference tablet 45 on which two bubble levels 46, 47 are arranged, one perpendicular to the other, intended to display the reached horizontal position of the same reference tablet 45.

When the latter is correctly arranged horizontally, according to the two orthogonal planes controlled by the bubble levels 46, 47, its position, with respect to that of the respective negative cast 2, 3, is stabilized by locking said ball joint 44 .

The block 43 bearing fixed a base 41, with the relative negative cast 2, 3, is suitable for being mounted on a manual articulator 50, consisting of a fixed lower platform 51, substantially horizontal, to which an upper arm is articulated in a lockable manner 52, arranged at a predetermined distance from said lower platform 51, and also practically horizontal.

For the aforementioned assembly, the spherical joint 44 is coupled to a rod 48 interposed between the fixed lower platform 51 and the upper arm 52, in a vertical position, orienting the base 41 and the relative cast in negative 2, 3, towards the inside the manual articulator 50.

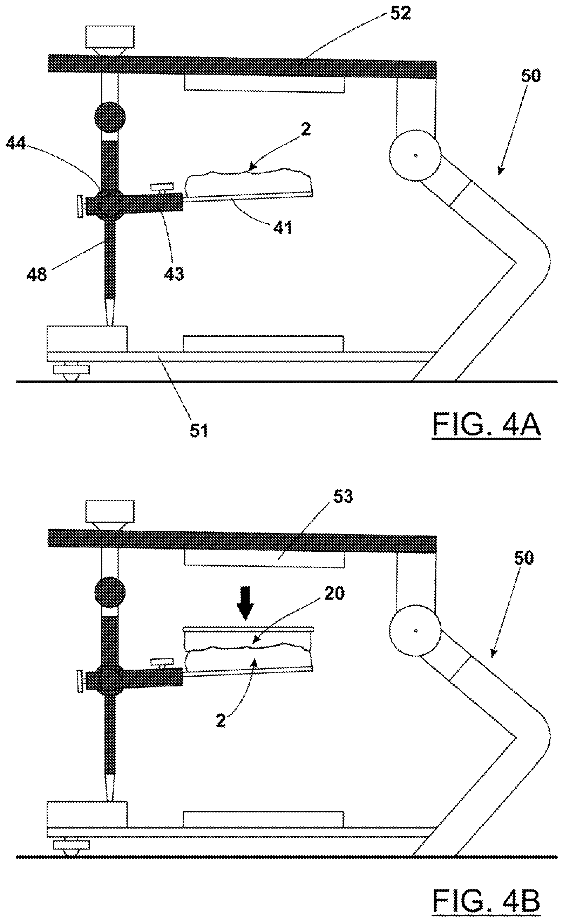

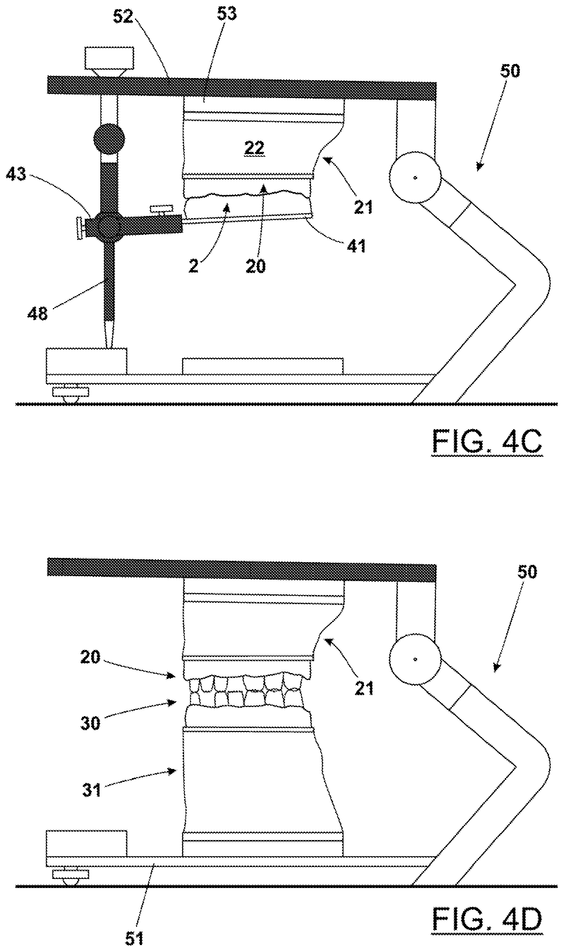

In particular, the assembly of the base 41 is first envisaged with the negative cast 2 of the upper dental arch (Fig. 4A), on which the corresponding model of the upper dental arch 20 (Fig. 4B) is placed to build, between the fixed lower platform 51 and upper arm 52, a support 21 of the same model 20, with the application of filler material 22 necessary to close the space between the same model 20 of the upper dental arch and a corresponding bracket 53 of said arm upper 52 (Fig.4C).

With the same procedure, repeated with the negative cast 3 of the lower dental arch and then with the relative model 30 of the same, a support 31 is obtained for the latter and the reciprocal position between the models of the aforementioned upper 20 and lower 30 dental arches is reconstructed on the manual articulator 50, which reproduces the position in which the respective real dental arches of the aforementioned subject S are mutually in contact (Fig. 4D).

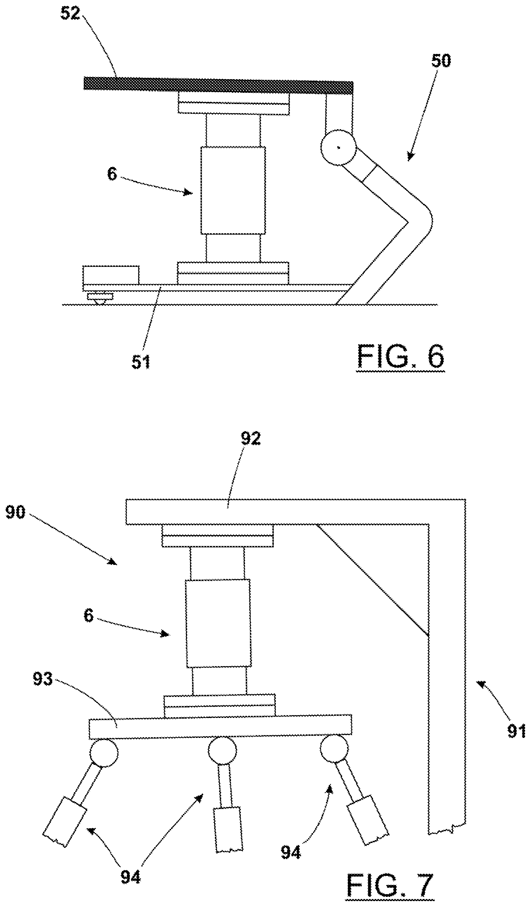

The distance and orientation assumed by the upper arm 52 with respect to the lower fixed platform 51 are detected, after the disassembly of the models 20, 30 with their respective supports 21, 31, by an extensible column template 6 (Fig. 6).

In the system 100 there are also means 70 for the acquisition and digitization of a predetermined sequence of chewing movements of the aforementioned subject S, on at least three reference axes.

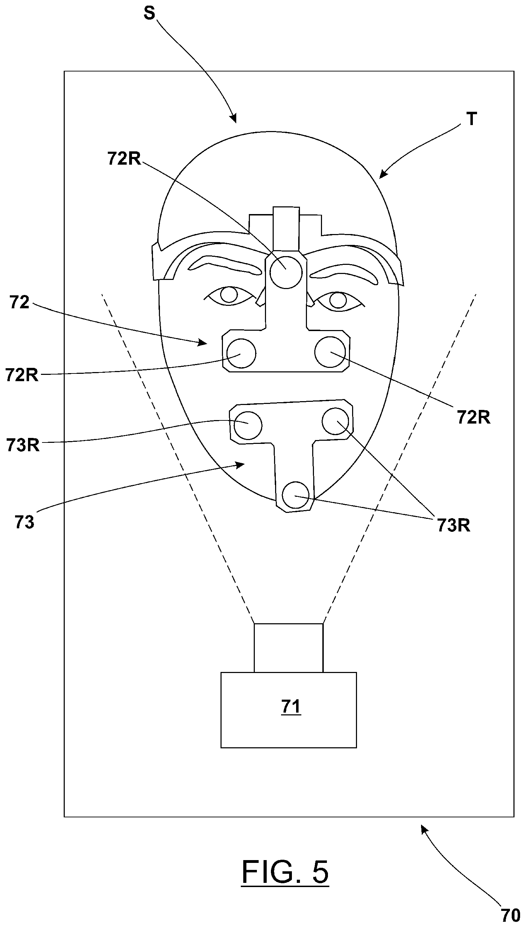

Said means 70 comprise a 3D scanner (of known type not shown), members 71 for video shooting of the subject S and positional reference means of the upper and lower dental arches; the latter, not visible in Fig. 5, are able to be introduced into the oral cavity of the subject S and to engage with his dental arches, so as to assume stable positions with respect to these.

The positional reference means are provided with respective upper 72 and lower 73 markers disposed externally to said oral cavity and each have at least three detection points 72R, 73R (see again Fig. 5).

Said means 70 are interfaced with a program generator 80, provided for the digital processing of said video recordings of the chewing movements, and to create a sequence of commands suitable for replicating the personalized mandibular movements of said subject S (Fig. 1).

The aforementioned extensible column template 6, disassembled from the manual articulator 50, is then used to statically record the starting position of a computer-controlled articulator robot 90 (Fig. 7).

In the articulator robot 90 there is a frame 91 from which an upper beam 92 protrudes, able to support, in a fixed hanging position, said model 20 of the upper dental arch, with the relative support 21, and a lower platform 93 above which said model 30 of the lower dental arch is fixed with the respective support 31.

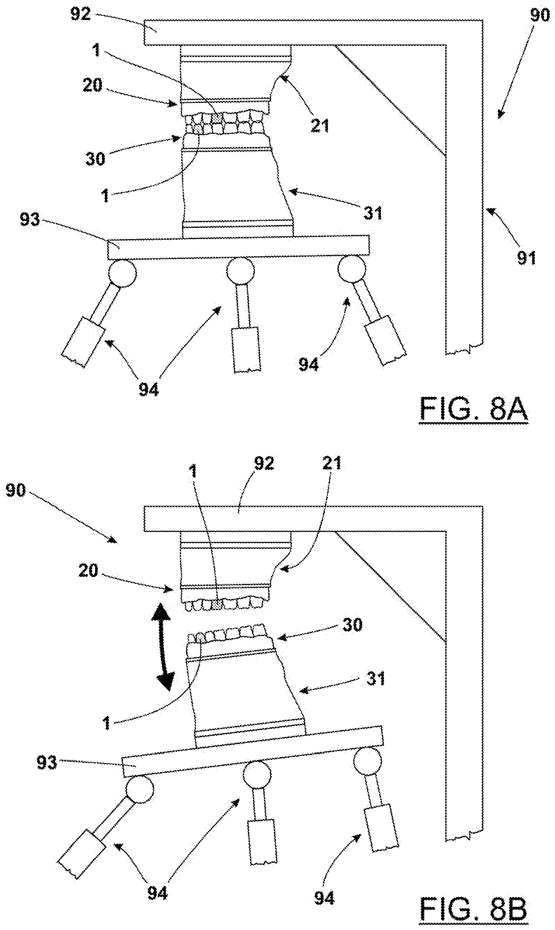

In said models 20, 30 at least one dental prosthesis 1 to be tested is applied (Figs. 8A, 8B).

The lower platform 93 is associated with a plurality of linear actuators 94, suitably arranged and oriented, capable of moving the same lower platform 93, as well as the model 30 of the lower dental arch with multiple trajectories according to different planes (see in particular the Fig. 8B), said linear actuators 94 being driven by a sequence of commands supplied by the aforementioned program generator 80, to simulate predetermined chewing movements of said models 20, 30 of upper and lower dental arches, and of the at least one dental prosthesis 1 from to test, in perfect replication of the mandibular movements of the subject S destined to receive the same at least one dental prosthesis 1.

The dental prosthesis 1 can therefore be verified exactly as if it had been directly applied to the mouth of the subject S, and therefore all the adjustments, measurements and modifications necessary to obtain a product directly applicable to the subject S can be made on it, without that direct tests on the latter are necessary, avoiding further modifications.

The system 100 just described effectively implements the method object of the present invention, for the dynamic testing of dental prostheses 1, of which at least one is intended to be implanted in a recipient S.

The main steps of the method, described below and also schematized in the diagram of Fig. 1, are preceded by known operations with which, for said subject S, a complete dentition model formed by a model 20 of an upper dental arch and a model 30 of a lower dental arch, with each of said models 20, 30 obtained starting from respective negative casts 2, 3 of said upper and lower dental arches.

A first version of the aforementioned at least one dental prosthesis 1 is also made in advance, to be applied to said models 20, 30 for testing and, after testing and any modifications, implanted in subject S.

In a first step of the method, said negative casts 2, 3 of the upper and lower dental arches are applied on relative bases 41, provided with a predetermined external attachment fork 42 (Fig. 2).

The second phase involves the assembly of the base 41 with a negative cast 2 of the upper dental arch, using the relative fork 42, in the attitude detection device 40 present in the system 100 previously described.

The third phase provides for the introduction of said base 41 with a negative cast 2 of the upper dental arch into the oral cavity of the aforementioned subject S, with the head T of the latter arranged in a predetermined position and with said device for detecting the trim 40 protruding in cantilever form outside the mouth (Fig. 3).

The head T of the subject S is preferably placed straight with the gaze turned to the horizon line.

The fourth phase involves the acquisition, by means of said attitude detection device 40, of the angular values of inclination of the aforementioned negative cast 2 of the upper dental arch and therefore of the upper dental arch itself, or of the jaw, of the aforementioned subject S (see again Fig. 3).

For the acquisition of the angular values of inclination of the dental arches of the subject S, first of the upper one, or of the maxilla, then of the lower one, or of the mandible, with a similar phase mentioned below, a reference tablet 45 provided in said attitude detection device 40 which is arranged horizontally, with the aid of bubble levels 46, 47.

The horizontal position reached is blocked and stabilized by tightening a ball joint 44, also provided in said attitude detection device 40.

The fifth phase involves the extraction from the oral cavity of the aforementioned subject S of said base 41 with a negative cast 2 of the upper dental arch with adjoining the attitude detection device 40.

The sixth phase involves the assembly of the base complex 41 with a negative cast 2 of the upper dental arch and the attitude detection device 40 in a manual articulator 50, present in the system 100 previously described (Fig. 4A).

The seventh phase involves the coupling of the aforementioned negative cast 2 of the upper dental arch with the respective model 20 of the upper dental arch (Fig. 4B) and the construction of a support 21 of the same model 20, with the application of material filler 22 necessary to close the space between the same upper dental arch model 20 and a corresponding bracket 53 of said manual articulator 50 (Fig. 4C).

The eighth phase involves the removal from the manual articulator 50 of the base complex 41 with a negative cast 2 of the upper dental arch and a trim detection device 40 and disassembly of the same base 41 with a negative cast 2 of the upper dental arch.

The phases from the second to the eighth are repeated using the remaining base 41 with a negative cast 3 of the lower dental arch, in order to obtain, on said manual articulator 50, also a support 31 for the model 30 of the lower dental arch.

In this way, on the manual articulator 50, the reciprocal position in which the models 20, 30 of the aforementioned upper and lower dental arches are mutually in contact is reconstructed, so as to reproduce the same position in which the respective real dental arches of the cited subject S (Fig. 4D).

Said models 20, 30 of the dental arches, with the relative supports 21, 31, are then disassembled from the manual articulator 50 and, without moving anything in the latter, a template with an extensible column 6 is mounted in their place, for detection of the configuration assumed as a consequence of the previous assembly (Fig. 6).

A subsequent phase involves the use of the aforementioned extensible column template 6 to record the static configuration of an articulator robot 90 in the same way as the aforementioned configuration assumed by the manual articulator 50 (Fig. 7).

A further step provides for the assembly on said articulator robot 90, thus registered, of the aforementioned models 20, 30 of said upper and lower dental arches, having applied at least one dental prosthesis 1 to be tested (Fig. 8A).

A phase carried out in parallel, provides for the acquisition and digitization of a predetermined sequence of chewing movements, on at least three reference axes, by means of video footage of the subject S carried out with a suitable 3D scanner, with the same subject S wearing reference means positional position of the upper and lower dental arches, provided with respective upper 72 and lower 73 markers with at least three detection points each 72R, 73R, arranged externally to the mouth (Fig. 5).

More precisely, the aforementioned upper markers 72, associated with the maxilla, are considered the fixed references, while the lower ones 73, associated with the mandible, are considered the movable references whose displacements are detected in relation to the positions of said fixed references.

Following the phase just described, another is planned which involves the digital processing of said shots with a program generator 80, to create a sequence of commands suitable for replicating the personalized mandibular movements of said subject S.

As a last step of the method, the aforementioned articulator robot 90 is operated with said sequence of commands, to move the aforementioned models 20, 30 of said upper and lower dental arches, with at least one dental prosthesis 1 to be tested applied, in perfect replica of the mandibular movements of the subject S destined to receive the same prosthesis 1, so as to be able to evaluate the correctness of the shape of the same dental prosthesis 1, and possibly modify it.

An optional phase of the method, even if known and not relevant for the purposes of the aforementioned peculiar phases, provides for detecting the three-dimensional mathematics of said upper and lower dental arch models 20, 30, including at least one dental prosthesis 1, and loading them in a software program of a dental CAD 10.

The digitized data of said predetermined sequence of chewing movements, on at least three reference axes, acquired by means of said video recordings of the subject S wearing positional reference means, is also loaded into the same software program of the dental CAD 10.

Finally, we proceed to interface, by means of said software program, said three-dimensional mathematics with the aforementioned digitized data of the sequence of chewing movements, to obtain a video-simulation of the same sequence to be used as a preliminary or parallel virtual test of said at least one prosthesis 1 with respect to the testing carried out with the aforementioned articulator robot 90 with mounted the models 20, 30 of said upper and lower dental arches.

With the method described, therefore, and in correspondence with what has already been said at the bottom of the description of the system 100, the dental prosthesis 1 can be checked exactly as if it had been directly applied to the mouth of the subject S, so that all of them can be carried out on it. the adjustments, measurements and modifications necessary to obtain a product directly applicable to subject S, without requiring one or more direct tests on the latter, avoiding further modifications.

From the above description, the advantageous aspects offered by the method in question are absolutely evident, in particular for experts in the sector, such as dental technicians and dentists, effectively transposed on a practical level by means of the system for dynamic testing of dental prostheses which, preliminarily, it allows to detect in a very accurate way the positional relationship between the dental arches of the subject, and then to report them exactly between the models of the same dental arches; the latter, arranged in this way, are mounted in an articulating robot, which is commanded to faithfully replicate all the possible chewing movements of the same subject, so as to be able to verify the behavior of the dental prosthesis/s as well as of the prosthesis as if they were installed in the subject's mouth.

To this end, the tools for detecting the positional relationship between the dental arches of the subject, provided in the system, have been created with original and innovative characteristics to provide the expected data with the necessary precision.

Another fundamental requirement, which is solved with the tools of the above system, concerns the acquisition of the three-dimensional parameters relating to the personal chewing movements of the recipient of the prosthesis, without which it would be impossible to control the aforementioned articulator robot to faithfully replicate them..

However, it is understood that what has been described above has an exemplary and non-limiting value, therefore any detailed variations that may be necessary for technical and/or functional reasons, are considered from now on to fall within the same protective scope defined by the following claims.

## Claims

1. Method for the dynamic testing of dental prostheses, a dental prosthesis (1) among these being intended to be implanted in a recipient subject (S), for which a dentition model has been made including a model (20) of an upper dental arch and a model (30) of a lower dental arch, with each of said models (20, 30) obtained starting from respective negative casts (2, 3) of said upper and lower dental arches, said method being **characterized by** providing the following operational steps:
a) application to said negative casts (2, 3) of the upper and lower dental arches of relative bases (41) provided with a predetermined external attachment fork (42);
b) assembly of said base (41) with a negative cast (2) of the upper dental arch, by means of the relative attachment fork (42), in an attitude detection device (40);
c) introduction of said base (41) with negative cast (2) of the upper dental arch into the oral cavity of the aforementioned subject (S), with the head (T) of the latter arranged in a predetermined position and with said detection device of the trim (40) projecting in a cantilever way outside the mouth;
d) acquisition, by means of said attitude detection device (40), of the angular values of inclination of the aforementioned negative cast (2) of the upper dental arch and therefore of the upper dental arch itself, or of the jaw, of the aforementioned subject (S);
e) extraction from the oral cavity of the aforementioned subject of said base (41) with a negative cast (2) of the upper dental arch with adjoining attitude detection device (40);
f) assembly of the base complex (41) with a negative cast (2) of the upper dental arch and a device for detecting the attitude (40) in a manual articulator (50);
g) coupling of the aforementioned negative cast (2) of the upper dental arch with the respective model (20) of the upper dental arch and the construction of a support (21) of the same model (20), with the application of filler material (22) between the same model (20) of the upper dental arch and a corresponding bracket (53) of said manual articulator (50);
h) removal from the latter of the base assembly (41) with a negative cast (2) of the upper dental arch and a trim detection device (40) and disassembly of the same base (41) with a negative cast (2) of the upper dental arch;
i)repetition of steps b) to h) using the aforementioned base (41) with a negative cast (3) of the lower dental arch, in order to obtain, on said manual articulator (50), also a support (31) for the lower dental arch model (30);
j)assembly on said manual articulator (50) of an extensible column template (6) for detecting the configuration assumed as a result of the subsequent assembly of the aforementioned negative casts (2, 3) and models (20, 30) of said upper dental arches and lower;
k) use of the aforementioned extensible column template (6) to record the configuration of an articulator robot (90) in the same way as the aforementioned configuration of the manual articulator (50);
l) assembly on said articulator robot (90), thus registered, of the aforementioned models (20, 30) of said upper and lower dental arches, having applied at least one dental prosthesis (1) to be tested;
m) acquisition and digitization of a predetermined sequence of chewing movements, on at least three reference axes, by video footage of the subject (S) made with a suitable 3D scanner, with the same subject (S) wearing positional reference means of the upper dental arches and lower, equipped with respective upper (72) and lower (73) markers with at least three detection points (72R, 73R), arranged outside the mouth;
n) digital processing of said shots with a program generator (80), to create a sequence of commands suitable for replicating the personalized mandibular movements of said subject (S);
o) actuation of the aforementioned articulator robot (90) with said sequence of commands, to move the aforementioned models (20, 30) of said upper and lower dental arches, having applied at least one dental prosthesis (1) to be tested, in perfect replication to the mandibular movements of the subject (S) destined to receive the same at least one dental prosthesis (1), so as to be able to evaluate the correctness of the shape of the same dental prosthesis (1), and possibly modify it.

2. Method according to rev. 1 **characterized in that** in the aforementioned distinct phases in which said negative casts (2, 3) of the upper and lower dental arches are introduced into the oral cavity of the aforementioned subject (S), the head (T) of the latter is placed straight with the gaze turned to the horizon line, and from the fact that in the subsequent relative phases for the acquisition of the angular values of the inclination of the upper and lower dental arches, or of the maxilla and mandible of the aforementioned subject (S), horizontal, with the aid of bubble levels (46, 47), a reference tablet (45) provided in said attitude detection device (40), and then a ball joint (44) is locked, also provided in the latter, to stabilize the relative position of the aforementioned reference tablet (45) with respect to that of said negative casts (2, 3).

3. Method according to rev. 1 **characterized in that** for the aforementioned acquisition and digitization phase of a predetermined sequence of chewing movements, the aforementioned detection points (72R) of the upper markers (72), associated with the maxilla, are considered the fixed references while the detection (73R) of the lower ones (73), associated with the mandible, are considered the movable references whose displacements are detected in relation to the positions of said fixed references.

4. Method according to rev. 1 **characterized in that** it is envisaged to: detect the three-dimensional mathematics of said upper and lower dental arch models (20, 30), including at least one dental prosthesis (1), and load them into a software program of a dental CAD; loading in the same software program of the dental CAD the digitized data of said predetermined sequence of chewing movements, on at least three reference axes, acquired through video recordings of the subject (S) made with a 3D scanner; interface, by means of said software program, said three-dimensional mathematics with the aforementioned digitized data of the sequence of chewing movements, to obtain a video-simulation of the same sequence to be used as a preliminary virtual test, or parallel, of said at least one dental prosthesis (1) compared to the testing carried out with the aforementioned articulator robot (90) with the aforementioned models (20, 30) of said upper and lower dental arches mounted.

5. System for the dynamic testing of dental prostheses, a dental prosthesis (1) among these being intended to be implanted in a recipient subject (S), for which a dentition model has been made including a model (20) of an upper dental arch and a model (30) of the lower dental arch, with each of said models (20, 30) obtained starting from respective negative casts (2, 3) of said upper and lower dental arches, said system (100) being **characterized in that** it comprises:
- an attitude detection device (40) in which there are provided: at least two bases (41), each provided with an external attachment fork (42), intended to support said negative casts (2, 3) of the upper dental arches and lower and to be introduced, one at a time, into the oral cavity of the aforementioned subject (S), with the head (T) of the latter arranged in a predetermined position and with said attitude detection device (40) protruding overhang outside the mouth; a block (43), removably associable with one of said bases (41) by means of the relative fork (42), to said block (43) being articulated, by means of a lockable spherical joint (44), a reference tablet (45) on the which are arranged, one orthogonal to the other, two air bubble levels (46, 47) intended to display the reached horizontal position of the same reference board (45), then locked by means of said ball joint (44), so as to stabilize the relative position of the aforementioned reference tablet (45) with respect to that of said negative casts (2, 3);
- a manual articulator (50), consisting of a fixed lower platform (51) to which an upper arm (52) is articulated in a lockable manner, arranged at a predetermined distance from said fixed lower platform (51), in said manual articulator (50) the subsequent assembly of the bases (41) being envisaged, with the negative casts (2, 3) of the dental arches, and of the associated block (43) with ball joint (44), to reconstruct, between said fixed lower platform (51 ) and said upper arm (52) the reciprocal position between the models (20, 30) of the aforementioned upper and lower dental arches which reproduces the position of the respective real dental arches of the aforementioned subject (S);
- an extensible column template (6) to acquire the distance and the resulting orientation between the fixed lower platform (51) and the upper arm (52) of said manual articulator (50), corresponding to an initial condition in which said models ( 20, 30) of the dental arches are mutually in contact;
- means (70) for the acquisition and digitization of a predetermined sequence of chewing movements of the aforementioned subject (S), on at least three reference axes, said means comprising a 3D scanner, members (71) for video shooting of the subject ( S) and positional reference means of the upper and lower dental arches, provided with respective upper (72) and lower (73) markers with at least three detection points, with said positional reference means provided to be introduced into the oral cavity of the subject, and with said markers (72, 73) arranged externally;
- a program generator (80), provided for the digital processing of said video footage of chewing movements, and to create a sequence of commands suitable for replicating the personalized mandibular movements of said subject (S);
- a computer-controlled articulator robot (90), designed to support said model (20) of the upper dental arch in a fixed position and to move said model (30) of the lower dental arch, the aforementioned articulator robot (90) being intended to be statically registered, by means of said extensible column template (6), according to said models (20, 30) of the dental arches, as well as suitable to be piloted by a sequence of commands provided by the aforementioned program generator (80), to simulate predetermined chewing movements of said models (20, 30) of upper and lower dental arches, with applied at least one dental prosthesis (1) to be tested, in perfect replication of the mandibular movements of the subject (S) destined to receive the same at least one dental prosthesis (1).

6. System according to the rev. 5, **characterized in that** it provides a rod (48) intended to be coupled to said ball joint (44) and to be stably interposed, vertically, between said fixed lower platform (51) and the aforementioned upper arm (52), so that the corresponding base (41) and the relative negative cast (2, 3) are oriented towards the inside of said manual articulator (50).

7. System according to the rev. 5, **characterized in that** said articulator robot (90) comprises a frame (91) from which an upper beam (92) protrudes, able to support in a fixed position said model (20) of the upper dental arch with the relative support (21), and a lower platform (93) to which said model (30) of the lower dental arch is fixed, with the respective support (31), and by the fact that said lower platform (93) is associated with a plurality of linear actuators (94), suitably arranged and oriented, capable of moving the same lower platform (93), as well as the associated model (30) of the lower dental arch, with multiple trajectories according to different planes, said linear actuators (94) being piloted from said sequence of commands supplied by the aforementioned program generator (80).

## Patentansprüche

1. Verfahren zur dynamischen Prüfung von Zahnprothesen, wobei eine dieser Prothesen (1) dazu bestimmt ist, in ein Empfangspersonal (S) implantiert zu werden, für das ein Gebissmodell hergestellt worden ist wobei das Modell ein Modell (20) eines oberen Zahnbogens und ein Modell (30) eines unteren Zahnbogens umfasst, wobei jedes der Modelle (20, 30) ausgehend von jeweiligen Negativabdrücken (2, 3) der oberen und unteren Zahnbögen erhalten wird, wobei das Verfahren **dadurch gekennzeichnet ist, dass** es die folgenden operativen Schritte umfasst:
a) Aufbringen von entsprechenden Sockeln (41), die mit einer vorbestimmten äußeren Befestigungsgabel (42) versehen sind, auf die Negativabdrücke (2, 3) der oberen und unteren Zahnbögen;
b) Zusammenbau des genannten Sockels (41) mit einem Negativabdruck (2) des oberen Zahnbogens mittels der entsprechenden Befestigungsgabel (42) in einer Vorrichtung zur Erfassung der Lage (40);
c) Einführen des Sockels (41) mit dem Negativabdruck (2) des oberen Zahnbogens in die Mundhöhle des genannten Subjekts (S), wobei der Kopf (T) des letzteren in einer vorbestimmten Position angeordnet ist und die Vorrichtung zur Erfassung der Lage (40) freitragend außerhalb des Mundes vorsteht;
d) Erfassen der Winkelwerte der Neigung des vorgenannten Negativabdrucks (2) des oberen Zahnbogens und somit des oberen Zahnbogens selbst oder des Kiefers des vorgenannten Subjekts (S) mittels der genannten Vorrichtung zur Erfassung der Lage (40);
e) Entnahme des Sockels (41) mit einem Negativabdruck (2) des oberen Zahnbogens aus der Mundhöhle des vorgenannten Subjekts mit angrenzender Vorrichtung zur Erfassung der Lage (40);
f) Zusammenbau des genannten Sockels (41) mit einem Negativabdruck (2) des oberen Zahnbogens mittels der entsprechenden Vorrichtung zur Erfassung der Lage (40) in einem manuellen Artikulator (50);
g) Verbinden des vorgenannten Negativabdruck (2) des oberen Zahnbogens mit dem entsprechenden Modell (20) des oberen Zahnbogens und Aufbau eines Trägers (21) desselben Modells (20), wobei Füllmaterial (22) zwischen demselben Modell (20) des oberen Zahnbogens und einem entsprechenden Bügel (53) des genannten manuellen Artikulators (50) aufgebracht wird;
h) Entfernen der Sockelbaugruppe (41) mit einem Negativabdruck (2) des oberen Zahnbogens und einer Vorrichtung zur Erfassung der Lage (40) aus letzterer und Zerlegen des Sockels (41) mit einem Negativabdruck (2) des oberen Zahnbogens;
i) Wiederholung der Schritte b) bis h) unter Verwendung des vorgenannten Sockels (41) mit einem Negativabdruck (3) des unteren Zahnbogens, um auf dem genannten manuellen Artikulator (50) auch einen Träger (31) für das Modell (30) des unteren Zahnbogens zu erhalten;
j) Montage einer dehnbaren Säulenschablone (6) auf dem manuellen Artikulator (50), um die Konfiguration zu erfassen, die als Ergebnis der nachfolgenden Montage der vorgenannten Negativabdrücke (2, 3) und Modelle (20, 30) der oberen und unteren Zahnbögen angenommen wird;
k) Verwendung der vorgenannten ausziehbaren Säulenschablone (6), um die Konfiguration eines Artikulatorroboters (90) auf die gleiche Weise wie die vorgenannte Konfiguration des manuellen Artikulators (50) zu erfassen;
l) Zusammensetzen der vorgenannten Modelle (20, 30) der oberen und unteren Zahnbögen nach Anbringen mindestens eines zu prüfenden Zahnprothesen (1) auf dem so erfassten Artikulatorroboter (90);
m) Erfassung und Digitalisierung einer vorbestimmten Sequenz von Kaubewegungen auf mindestens drei Referenzachsen durch Videoaufnahmen des Subjekts (S), die mit einem geeigneten 3D-Scanner gemacht wurden, wobei derselbe Subjekt (S) Positionsreferenzmittel der oberen und unteren Zahnbögen trägt, die mit entsprechenden oberen (72) und unteren (73) Markern mit mindestens drei Erfassungspunkten (72R, 73R) ausgestattet sind, die außerhalb des Mundes angeordnet sind;
n) digitale Verarbeitung der besagten Aufnahmen mit einem Programmgenerator (80), um eine Befehlssequenz zu erzeugen, die geeignet ist, die personalisierten Unterkieferbewegungen des vorgenannten Subjekts (S) nachzubilden;
o) Betätigung des vorgenannten Artikulationsroboters (90) mit der genannten Befehlsfolge, um die vorgenannten Modelle (20, 30) der genannten oberen und unteren Zahnbögen, auf denen mindestens eine zu prüfende Zahnprothese (1) angebracht ist, in perfekter Nachbildung der Unterkieferbewegungen des Subjekts (S), die dazu bestimmt ist, dieselbe mindestens eine Zahnprothese (1) zu erhalten, zu bewegen, um die Korrektheit der Form derselben Zahnprothese (1) bewerten und sie möglicherweise ändern zu können.

2. Verfahren nach Anspruch 1, **dadurch gekennzeichnet, dass** in den vorgenannten verschiedenen Phasen, in denen die genannten Negativabdrücke (2, 3) der oberen und unteren Zahnbögen in die Mundhöhle des vorgenannten Subjekts (S) eingeführt werden, der Kopf (T) der letzteren gerade mit dem Blick zur Horizontlinie gerichtet ist, und dass in den nachfolgenden relativen Phasen zur Erfassung der Winkelwerte der Neigung der oberen und unteren Zahnbögen, oder des Ober- und Unterkiefers des genannten Subjekts (S) mit Hilfe von Wasserwaagen (46, 47) eine in der genannten Vorrichtung zur Erfassung der Lage (40) vorgesehene Referenztafel (45) horizontal ausgerichtet wird und dann ein ebenfalls in dieser Vorrichtung vorgesehenes Kugelgelenk (44) verriegelt wird, um die relative Position der genannten Referenztafel (45) in Bezug auf die der genannten Negativabdrücke (2, 3) zu stabilisieren.

3. Verfahren nach Anspruch 1, **dadurch gekennzeichnet, dass** für die vorgenannte Erfassungs- und Digitalisierungsphase einer vorbestimmten Sequenz von Kaubewegungen die vorgenannten Erfassungspunkte (72R) der oberen Markierungen (72), die dem Oberkiefer zugeordnet sind, als feste Bezugspunkte betrachtet werden, während die Erfassung (73R) der unteren Markierungen (73), die dem Unterkiefer zugeordnet sind, als bewegliche Bezugspunkte betrachtet werden, deren Verschiebungen in Bezug auf die Positionen der genannten festen Bezugspunkte erfasst werden.

4. Verfahren nach Anspruch 1, **dadurch gekennzeichnet, dass** vorgesehen ist: Erfassen der dreidimensionalen Mathematik der oberen und unteren Zahnbogenmodelle (20, 30), die mindestens eine Zahnprothese (1) enthalten, und Laden dieser Modelle in ein Softwareprogramm eines dentalen CAD; Laden der digitalisierten Daten der vorbestimmten Sequenz von Kaubewegungen auf mindestens drei Referenzachsen, die durch Videoaufnahmen des Subjekts (S) mit einem 3D-Scanner gewonnen wurden, in dasselbe Softwareprogramm des dentalen CAD; Koppeln der dreidimensionalen Mathematik mit Hilfe des genannten Softwareprogramms mit den vorgenannten digitalisierten Daten der Abfolge von Kaubewegungen, um eine Videosimulation der gleichen Abfolge zu erhalten, die als vorläufiger virtueller Test oder parallel zu dem mit dem vorgenannten Artikulatorroboter (90) durchgeführten Test mit den vorgenannten Modellen (20, 30) der oberen und unteren Zahnbögen verwendet werden soll.

5. Verfahren zur dynamischen Prüfung von Zahnprothesen, wobei eine dieser Prothesen (1) dazu bestimmt ist, in einen Empfängersubjekt (S) implantiert zu werden, für den ein Gebissmodell hergestellt wurde, das ein Modell (20) eines oberen Zahnbogens und ein Modell (30) des unteren Zahnbogens umfasst, wobei jedes der Modelle (20, 30) ausgehend von jeweiligen Negativabdrücken (2, 3) des oberen und unteren Zahnbogens erhalten wird, wobei das System (100) **dadurch gekennzeichnet ist, dass** es umfasst:
- eine Vorrichtung zur Erfassung der Lage (40), in der vorgesehen sind: mindestens zwei Sockel (41), die jeweils mit einer äußeren Befestigungsgabel (42) versehen sind und dazu bestimmt sind, die Negativabdrücke (2, 3) der oberen und unteren Zahnbögen zu tragen und jeweils einzeln in die Mundhöhle des oben genannten Subjekts (S) eingeführt zu werden, wobei der Kopf (T) der letzteren in einer vorbestimmten Position angeordnet ist und die Vorrichtung zur Erfassung der Lage (40) aus dem Mund herausragt; einen Block (43), der mittels der entsprechenden Gabel (42) abnehmbar mit einem der Sockel (41) verbunden werden kann, wobei an dem Block (43) mittels eines verriegelbaren Kugelgelenks (44) eine Referenztafel (45) angelenkt ist, auf der orthogonal zueinander zwei Luftblasenwaagen (46, 47) angeordnet sind, die dazu bestimmt sind, die erreichte horizontale Position derselben Referenztafel (45) anzuzeigen, die dann mittels des Kugelgelenks (44) verriegelt wird, um die relative Position der vorgenannten Referenztafel (45) in Bezug auf die der Negativabdrücke (2, 3) zu stabilisieren;
- einen manuellen Artikulator (50), der aus einer festen unteren Plattform (51) besteht, an der ein oberer Arm (52) in verriegelbarer Weise angelenkt ist, der in einem vorbestimmten Abstand von der festen unteren Plattform (51) angeordnet ist, wobei in dem manuellen Artikulator (50) die nachfolgende Montage der Basen (41) mit den Negativabgüssen (2, 3) der Zahnbögen vorgesehen ist, und des zugehörigen Blocks (43) mit Kugelgelenk (44) vorgesehen ist, um zwischen der festen unteren Plattform (51) und dem oberen Arm (52) die wechselseitige Position zwischen den Modellen (20, 30) der vorgenannten oberen und unteren Zahnbögen zu rekonstruieren, die die Position der jeweiligen realen Zahnbögen des vorgenannten Subjekts (S) wiedergibt;
- eine ausziehbare Säulenschablone (6) zur Erfassung des Abstands und der sich daraus ergebenden Ausrichtung zwischen der festen unteren Plattform (51) und dem oberen Arm (52) des manuellen Artikulators (50), entsprechend einem Ausgangszustand, in dem die Modelle (20, 30) der Zahnbögen miteinander in Kontakt sind;
- Mittel (70) zum Erfassen und Digitalisieren einer vorbestimmten Sequenz von Kaubewegungen des oben erwähnten Subjekts (S) auf mindestens drei Referenzachsen, wobei die Mittel einen 3D-Scanner, Elemente (71) für Videoaufnahmen des Subjekts (S) und Positionsreferenzmittel der oberen und unteren Zahnbögen umfassen, die mit entsprechenden oberen (72) und unteren (73) Markierungen mit mindestens drei Erfassungspunkten versehen sind, wobei die Positionsreferenzmittel vorgesehen sind, um in die Mundhöhle des Subjekts eingeführt zu werden, und wobei die Markierungen (72, 73) extern angeordnet sind;
- einen Programmgenerator (80), der für die digitale Verarbeitung des Videomaterials der Kaubewegungen vorgesehen ist, um eine Folge von Befehlen zu erzeugen, die geeignet sind, die personalisierten Unterkieferbewegungen des Subjekts (S) nachzubilden;
- einen computergesteuerten Artikulationsroboter (90), der dazu bestimmt ist, das Modell (20) des oberen Zahnbogens in einer festen Position zu halten und das Modell (30) des unteren Zahnbogens zu bewegen, wobei der vorgenannte Artikulationsroboter (90) dazu bestimmt ist, mit Hilfe der ausziehbaren Säulenschablone (6) entsprechend den Modellen (20, 30) der Zahnbögen statisch registriert zu werden, sowie dazu geeignet ist, durch eine Folge von Befehlen gesteuert zu werden, die von dem vorgenannten Programmgenerator (80) geliefert werden, um vorbestimmte Kaubewegungen der Modelle (20, 30) der oberen und unteren Zahnbögen zu simulieren, wobei mindestens eine zu prüfende Zahnprothese (1) eingesetzt wird, und zwar in perfekter Nachbildung der Unterkieferbewegungen des Subjekts (S), die dazu bestimmt ist, diese mindestens eine Zahnprothese (1) zu erhalten.

6. Verfahren nach Anspruch 5, **dadurch gekennzeichnet, dass** es eine Stange (48) vorsieht, die dazu bestimmt ist, mit dem Kugelgelenk (44) gekoppelt zu werden und in vertikaler Richtung stabil zwischen der feststehenden unteren Plattform (51) und dem vorgenannten oberen Arm (52) angeordnet zu werden, so dass die entsprechende Basis (41) und das entsprechende Negativmodell (2, 3) zum Inneren des manuellen Artikulators (50) hin ausgerichtet sind.

7. Verfahren nach Anspruch 5, **dadurch gekennzeichnet, dass** der Artikulationsroboter (90) einen Rahmen (91) umfasst, aus dem ein oberer Träger (92) herausragt, der in der Lage ist, das Modell (20) des oberen Zahnbogens mit der entsprechenden Halterung (21) in einer festen Position zu halten, und eine untere Plattform (93), an der das Modell (30) des unteren Zahnbogens mit der entsprechenden Halterung (31) befestigt ist, und dadurch, dass die untere Plattform (93) mit einer Vielzahl von linearen Stellgliedern (94) verbunden ist, die in geeigneter Weise angeordnet und ausgerichtet sind und in der Lage sind, dieselbe untere Plattform (93) sowie das zugehörige Modell (30) des unteren Zahnbogens auf mehreren Bahnen in verschiedenen Ebenen zu bewegen, wobei die linearen Stellglieder (94) durch die von dem vorgenannten Programmgenerator (80) gelieferte Befehlsfolge gesteuert werden.

## Revendications

1. Procédé d'essai dynamique de prothèses dentaires, une prothèse dentaire (1) parmi ces prothèses étant destinée à être implantée dans un sujet receveur (S), pour lequel un modèle de dentition a été réalisé, le modèle comprenant un modèle (20) d'une arcade dentaire supérieure et un modèle (30) d'une arcade dentaire inférieure, chacun desdits modèles (20, 30) étant obtenu à partir de moulages négatifs (2, 3) respectifs desdites arcades dentaires supérieure et inférieure, cette méthode étant **caractérisée par** les étapes opérationnelles suivantes:
a) application sur lesdits moulages négatifs (2, 3) des arcades dentaires supérieure et inférieure de bases relatives (41) munies d'une fourche de fixation externe prédéterminée (42);
b) assemblage de ladite base (41) avec un moulage négatif (2) de l'arcade dentaire supérieure, au moyen de la fourche de fixation relative (42), dans un dispositif de détection d'attitude (40);
c) introduction de ladite base (41) avec moulage négatif (2) de l'arcade dentaire supérieure dans la cavité buccale du sujet (S) précité, la tête (T) de ce dernier étant disposée dans une position prédéterminée et ledit dispositif de détection d'attitude (40) faisant saillie en porte-à-faux à l'extérieur de la bouche;
d) acquisition, au moyen dudit dispositif de détection d'attitude (40), des valeurs angulaires d'inclinaison de ladite moulage négatif (2) de l'arcade dentaire supérieure et donc de l'arcade dentaire supérieure elle-même, ou de la mâchoire, du sujet (S) susmentionné;
e) extraction de la cavité buccale du sujet susmentionné de ladite base (41) avec un moulage négatif (2) de l'arcade dentaire supérieure avec un dispositif de détection d'attitude (40) attenant;
f) assemblage du complexe de base (41) avec un moulage négatif (2) de l'arcade dentaire supérieure et un dispositif de détection de l'attitude (40) dans un articulateur manuel (50);
g) couplage du modèle négatif (2) de l'arcade dentaire supérieure susmentionné avec le modèle respectif (20) de l'arcade dentaire supérieure et construction d'un support (21) du même modèle (20), avec application d'un matériau de remplissage (22) entre le même modèle (20) de l'arcade dentaire supérieure et un support correspondant (53) de l'articulateur manuel (50);
h) le retrait de ce dernier du complexe de base (41) avec un moulage négatif (2) de l'arcade dentaire supérieure et d'un dispositif de détection de coupe (40) et le démontage de la même base (41) avec un moulage négatif (2) de l'arcade dentaire supérieure;
i) répétition des étapes b) à h) en utilisant la base (41) susmentionnée avec un moulage négatif (3) de l'arcade dentaire inférieure, afin d'obtenir, sur ledit articulateur manuel (50), également un support (31) pour le modèle de l'arcade dentaire inférieure (30);
j) monter sur ledit articulateur manuel (50) un gabarit de colonne extensible (6) pour détecter la configuration assumée à la suite de l'assemblage ultérieur des moulages négatifs (2, 3) et des modèles (20, 30) susmentionnés des arcades dentaires supérieure et inférieure;
k) en utilisant le gabarit de colonne extensible (6) susmentionné pour enregistrer la configuration d'un robot articulateur (90) de la même manière que la configuration susmentionnée de l'articulateur manuel (50);
l) assemblage des modèles précités (20, 30) desdites arcades centales supérieure et inférieure, après application d'au moins une prothèse dentaire (1) à tester, sur ledit robot articulateur (90) ainsi enregistré;
m) acquisition et digitalisation d'une séquence prédéterminée de mouvements de mastication, sur au moins trois axes de référence, par des prises de vue vidéo du sujet (S) réalisées avec un scanner 3D approprié, le même sujet (S) portant des moyens de référence positionnels des arcades dentaires supérieure et inférieure, équipés de marqueurs respectifs supérieur (72) et inférieur (73) avec au moins trois points de détection (72R, 73R), disposés à l'extérieur de la bouche;
n) traitement digital de ces prises de vue avec un générateur de programmes (80), pour créer une séquence de commandes aptes à reproduire les mouvements mandibulaires personnalisés dudit sujet (S);
o) actionnement dudit robot articulateur (90) avec ladite séquence de commandes, pour déplacer lesdits modèles (20, 30) desdites arcades dentaires supérieures et inférieures, ayant appliqué au moins une prothèse dentaire (1) à tester, en parfaite réplique aux mouvements mandibulaires du sujet (S) destiné à recevoir la même au moins une prothèse dentaire (1), afin de pouvoir évaluer la justesse de la forme de la même prothèse dentaire (1), et éventuellement de la modifier.

2. Procédé selon la revendication 1, **caractérisé en ce que** dans les phases distinctes susmentionnées, dans lesquelles lesdits moulages négatifs (2, 3) des arcades dentaires supérieure et inférieure sont introduits dans la cavité buccale du sujet susmentionné (S), la tête (T) de ce dernier est placée droite avec le regard tourné vers la ligne d'horizon, et du fait que dans les phases relatives ultérieures pour l'acquisition des valeurs angulaires de l'inclinaison des arcades dentaires supérieure et inférieure, la tête (T) de ce dernier est placée droite avec le regard tourné vers la ligne d'horizon, ou du maxillaire et de la mandibule du sujet susmentionné (S), horizontalement, à l'aide de niveaux à bulle (46, 47), une tablette de référence (45) prévue dans ledit dispositif de détection d'attitude (40), puis on bloque une rotule (44), également prévue dans ce dernier, pour stabiliser la position relative de ladite tablette de référence (45) par rapport à celle desdits moulages négatifs (2, 3).

3. Procédé selon la revendication 1, **caractérisé en ce que** pour la phase d'acquisition et de numérisation précitée d'une séquence prédéterminée de mouvements de mastication, les points de détection précités (72R) des marqueurs supérieurs (72), associés au maxillaire, sont considérés comme les références fixes tandis que les points de détection (73R) des marqueurs inférieurs (73), associés à la mandibule, sont considérés comme les références mobiles dont les déplacements sont détectés par rapport aux positions desdites références fixes.

4. Procédé selon la revendication 1, **caractérisé en ce que** il est prévu de: détecter les mathématiques tridimensionnelles desdits modèles d'arcades dentaires supérieures et inférieures (20, 30), comprenant au moins une prothèse dentaire (1), et les charger dans un logiciel de CAD dentaire; charger dans le même logiciel de CAD dentaire les données digitalisées de ladite séquence prédéterminée de mouvements de mastication, sur au moins trois axes de référence, acquises par des enregistrements vidéo du sujet (S) réalisés à l'aide d'un scanner 3D; interfacer, au moyen dudit logiciel, lesdites mathématiques tridimensionnelles avec les données digitalisées susmentionnées de la séquence des mouvements de mastication, pour obtenir une simulation vidéo de la même séquence à utiliser comme test virtuel préliminaire, ou parallèle, de ladite au moins une prothèse dentaire (1) par rapport au test effectué avec le robot articulateur susmentionné (90) avec les modèles susmentionnés (20, 30) desdites arcades dentaires supérieures et inférieures montées.

5. Système d'essai dynamique de prothèses dentaires, une prothèse dentaire (1) parmi ces prothèses étant destinée à être implantée chez un sujet receveur (S), pour laquelle un modèle de dentition a été réalisé comprenant un modèle (20) d'une arcade dentaire supérieure et un modèle (30) de l'arcade dentaire inférieure, chacun desdits modèles (20, 30) étant obtenu à partir de moulages négatifs (2, 3) respectifs desdites arcades dentaires supérieure et inférieure, ledit système (100) étant caractérisé en ce qu'il comprend:
- un dispositif de détection d'attitude (40) dans lequel sont prévues: au moins deux bases (41), munies chacune d'une fourche de fixation externe (42), destinées à supporter lesdits moulages négatifs (2, 3) des arcades dentaires supérieure et inférieure et à être introduites, une à la fois, dans la cavité buccale du sujet (S) susmentionné, la tête (T) de ce dernier étant disposée dans une position prédéterminée et ledit dispositif de détection d'attitude (40) faisant saillie à l'extérieur de la bouche; un bloc (43), associable de manière amovible à l'une desdites bases (41) au moyen de la fourche relative (42), audit bloc (43) étant articulé, au moyen d'une articulation sphérique verrouillable (44), à une tablette de référence (45) sur laquelle sont disposés, l'un orthogonal à l'autre, deux niveaux à bulles d'air (46, 47) destinés à afficher la position horizontale atteinte de la même tablette de référence (45), puis verrouillés au moyen de ladite articulation sphérique (44), de manière à stabiliser la position relative de ladite tablette de référence (45) par rapport à celle desdits moulages négatifs (2, 3);
- un articulateur manuel (50), constitué d'une plate-forme inférieure fixe (51) à laquelle s'articule de manière verrouillable un bras supérieur (52), disposé à une distance prédéterminée de ladite plate-forme inférieure fixe (51), dans ledit articulateur manuel (50) étant envisagé l'assemblage ultérieur des bases (41) avec les moulages négatifs (2, 3) des arcades dentaires, et du bloc associé (43) avec articulation à rotule (44), pour reconstruire, entre ladite plate-forme inférieure fixe (51) et ledit bras supérieur (52), la position réciproque entre les modèles (20, 30) des arcades dentaires supérieures et inférieures susmentionnées, qui reproduit la position des arcades dentaires réelles respectives du sujet (S) susmentionné;
- un gabarit colonne extensible (6) pour acquérir la distance et l'orientation résultante entre la plateforme inférieure fixe (51) et le bras supérieur (52) dudit articulateur manuel (50), correspondant à un état initial dans lequel lesdits modèles ( 20, 30) des arcades dentaires sont mutuellement en contact;
- des moyens (70) pour l'acquisition et la digitalisation d'une séquence prédéterminée de mouvements de mastication du sujet (S) susmentionné, sur au moins trois axes de référence, lesdits moyens comprenant un scanner 3D, des organes (71) pour la prise de vue vidéo du sujet (S) et des moyens de référence positionnels des arcades dentaires supérieure et inférieure, munis de marqueurs supérieurs (72) et inférieurs (73) respectifs avec au moins trois points de détection, lesdits moyens de référence positionnels étant prévus pour être introduits dans la cavité buccale du sujet, et lesdits marqueurs (72, 73) étant disposés à l'extérieur;
- un générateur de programme (80), prévu pour le traitement digital de ladite séquence vidéo des mouvements de mastication, et pour créer une séquence de commandes aptes à reproduire les mouvements mandibulaires personnalisés dudit sujet (S):
- un robot articulateur (90) commandé par ordinateur, conçu pour soutenir ledit modèle (20) de l'arcade dentaire supérieure dans une position fixe et pour déplacer ledit modèle (30) de l'arcade dentaire inférieure, ledit robot articulateur (90) étant destiné à être enregistré statiquement, au moyen dudit gabarit de colonne extensible (6), en fonction desdits modèles (20, 30) des arcades dentaires, ainsi qu'apte à être piloté par une séquence de commandes fournies par le générateur de programmes (80) précité, pour simuler des mouvements de mastication prédéterminés desdits modèles (20, 30) d'arcades dentaires supérieures et inférieures, avec application d'au moins une prothèse dentaire (1) à tester, en parfaite réplication des mouvements mandibulaires du sujet (S) destiné à recevoir la même au moins une prothèse dentaire (1).

6. Système selon la revendication 5, **caractérisé en ce qu'**il prévoit une tige (48) destinée à être accouplée à ladite rotule (44) et à être interposée de façon stable, verticalement, entre ladite plateforme inférieure fixe (51) et le bras supérieur susmentionné (52), de sorte que la base correspondante (41) et le moulage négatif (2, 3) relatif soient orientés vers l'intérieur dudit articulateur manuel (50).

7. Système selon la revendication 5, **caractérisé en ce que** ledit robot articulateur (90) comprend un cadre (91) duquel dépasse une poutre supérieure (92), capable de supporter en position fixe ledit modèle (20) de l'arcade dentaire supérieure avec le support relatif (21), et une plateforme inférieure (93) à laquelle est fixé ledit modèle (30) de l'arcade dentaire inférieure, avec le support (31) respectif, et par le fait que ladite plateforme inférieure (93) est associée à une pluralité d'actionneurs linéaires (94), convenablement disposés et orientés, capables de déplacer la même plateforme inférieure (93), ainsi que le modèle associé (30) de l'arcade dentaire inférieure, avec des trajectoires multiples selon des plans différents, lesdits actionneurs linéaires (94) étant pilotés à partir de ladite séquence de commandes fournie par le générateur de programmes (80) susmentionné.
